# EUROPEAN PATENT APPLICATION

(11) **EP 2 693 262 A1**
(43) Date of publication of application: **05.02.2014**
(21) Application number: 13178898.6
(22) Date of filing: 01.08.2013
(51) Int. Cl.: G02C 7/12, H04N 13/04

(54) **Polarizing prescription eyewear having a three-dimensional viewing function**

(30) Priority: 03.08.2012 TW 101128029
(71) Applicant: Y-Johnson Co., Ltd., Tainan City 70843 (TW); Tzeng, Ching-Biau, Tainan City 71062 (TW)
(72) Inventor: Tzeng, Ching-Biau, Tainan City, 71062 (TW)
(74) Representative: Midgley, Jonathan Lee

(57) **Abstract**

A polarized prescriptioneyewearincludes:an eyeglass frame (2) ; left and right prescription lens elements (41) mounted on the eyeglass frame (2) ; left and right UV-cured glue layers (42); left and right circular polarizers (43) adhesively bonded to the left and right prescription lens elements (41) through the left and right UV-cured glue layers (42) and configured to filter out right-handed and left-handed polarized light (52, 51), respectively; and left and right hard coating layers (44) formed on the left and right circular polarizers (43), respectively.

## Description

This invention relates to a polarized prescription eyewear having a three-dimensional viewing function, more particularly to a polarized prescription eyewear including prescription lens elements and circular polarizers bonded respectively to the prescription lens elements.

A three dimensional (3D) display apparatus can produce left-eye and right-eye images that are superimposed on a screen for providing a 3D effect. A user can wear a 3D eyewear including left and right lenses that are configured to view the left-eye and right-eye images, respectively, so as to achieve 3D viewing.

U.S. Patent Publication No. 2011/0199680 discloses a conventional eyewear having a three dimensional viewing function and including a frame, left and right lens elements supported on the frame, and left and right auxiliary lens elements that are configured to be detachably or removably attached to the left and right lens elements using clips, respectively. The left auxiliary lens element is configured to block light polarized in a first direction from passing therethrough, while the right auxiliary lens element is configured to block light polarized in a second direction opposite to the first direction from passing therethrough, thereby permitting the viewer's left eye to view a left-image portion of a three dimensional (3D) image and the viewer's right eye to view a right-image portion of the 3D image.

Since each of the left and right auxiliary lens elements is detachably attached to the respective one of the left and right lens elements, an air gap is undesirably formed between each of the left and right auxiliary lens elements and the respective one of the left and right lens elements, which can result in undesired internal reflections in the conventional eyewear and generation of undesired ghost images or unwanted images. In addition, the chances of misplacing the left and right auxiliary lens elements after being detached from the left and right lens elements are likely to be high.

The disclosure of U.S. Patent Publication No. 2011/0199680 is incorporated herein by reference.

Therefore, an object of the present invention is to provide a polarized prescription eyewear that can overcome the aforesaid drawbacks associated with the prior art.

According to this invention, there is provided a polarizedprescription eyewear having a three-dimensional viewing function. The polarized prescription eyewear comprises: an eyeglass frame; left and right prescription lens elements mounted on the eyeglass frame; left and right UV-cured glue layers; left and right circular polarizers adhesively bonded to the left and right prescription lens elements through the left and right UV-cured glue layers and configured to filter out right-handed and left-handed polarized light, respectively; and left and right hard coating layers formed on the left and right circular polarizers, respectively.

In drawings which illustrate an embodiment of the invention,
Fig. 1 is a perspective view of the preferred embodiment of a polarized prescription eyewear according to the present invention;
Fig. 2 is a fragmentary sectional view of the preferred embodiment; and
Fig. 3 is an exploded perspective view of a lens unit of the preferred embodiment.

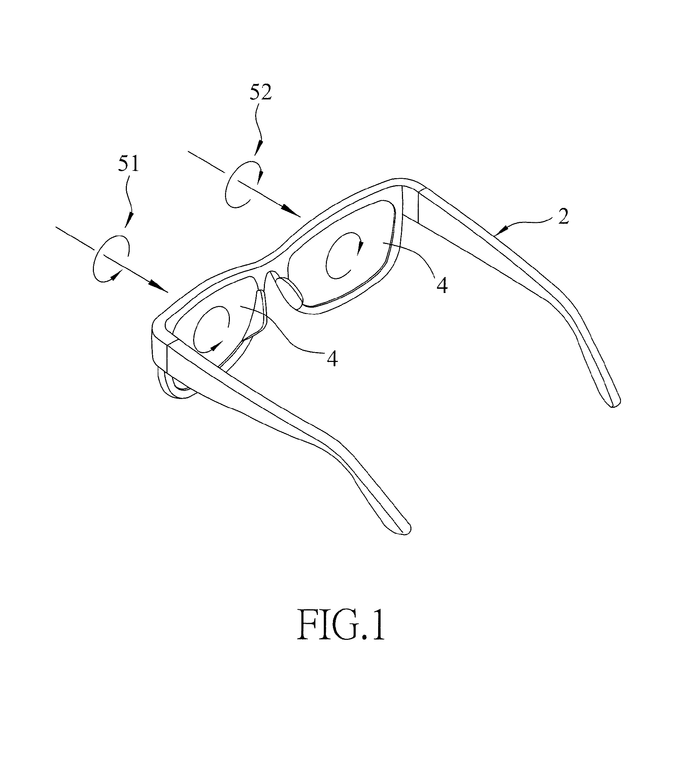

Figs. 1 to 3 illustrate the preferred embodiment of a polarized prescription eyewear according to the present invention. The polarized prescription eyewear has a three-dimensional viewing function and a blurred vision correction function (such as correcting nearsighted, farsighted and astigmatic vision), and includes an eyeglass frame 2 and left and right lens units 4 that are mounted on the eyeglass frame 2 and that are configured such that left-eye images, which are produced using a 3D display apparatus (not shown) and which are displayed using left-handed circularly polarized light 51, are viewable only by the user's left eye through the left lens unit 4, and right-eye images, which are produced using the 3D display apparatus and which are displayed using right-handed circularly polarized light 52, are viewable only by the user's right eye through the right lens unit 4. Techniques of generating the left-handed and right-handed circularly polarized light 51, 52 for displaying the left and right images on a display screen are well known in the art, and hence will not be described in detail herein for the sake of brevity.

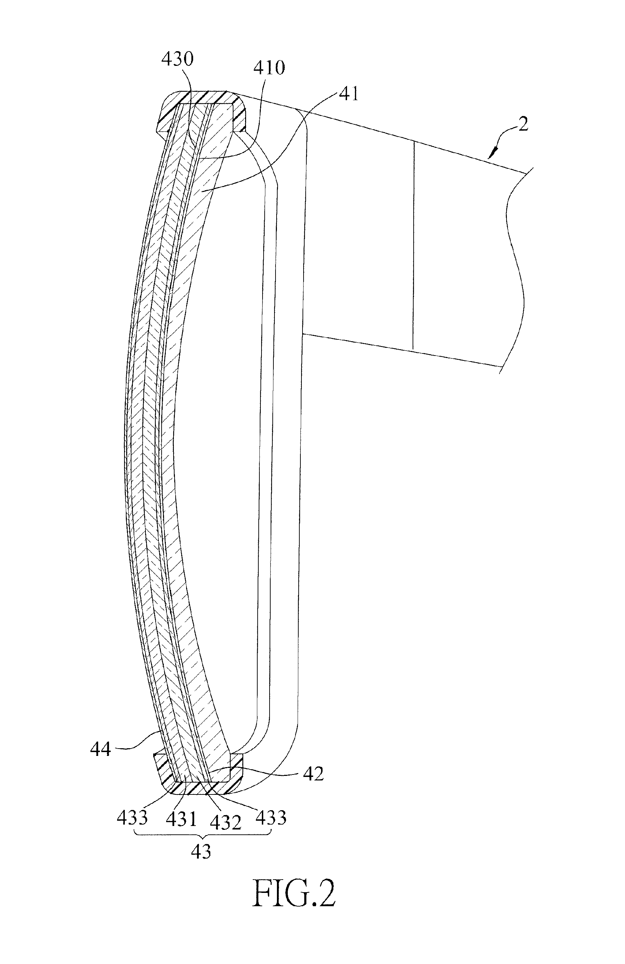

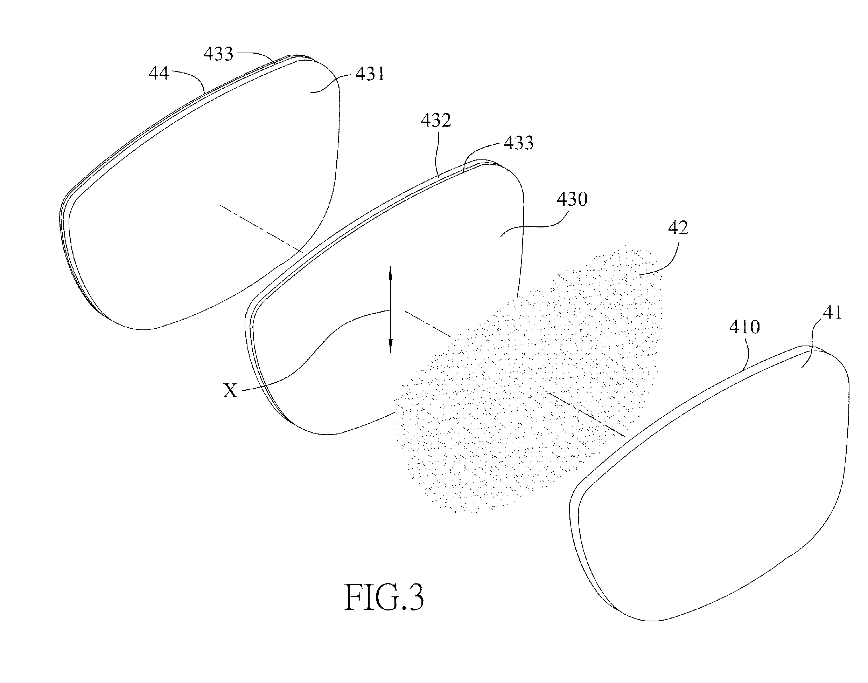

The left and right lens units 4 include left and right prescription lens elements 41, left and right UV-cured glue layers 42, left and right circular polarizers 43, and left and right hard coating layers 44, respectively (since the left and right lens units 4 have the same structure, only one of the left and right lens units 4 is shown in Figs. 2 and 3 to illustrate the structure thereof).

The left and right prescription lens elements 41 are mounted on the eyeglass frame 2. The left and right circular polarizers 43 are adhesively bonded to the left and right prescription lens elements 41 through the left and right UV-cured glue layers 42, and are configured to filter out the right-handed polarized light 52 and the left-handed polarized light 51, respectively. The left and right hard coating layers 44 are formed on the left and right circular polarizers 43, respectively.

In this embodiment, each of the left and right circular polarizers 43 has a quarter wave plate 431 and a linear polarizer film 432 that is adhesively bonded to the quarter wave plate 431 and that has a vertical transmission axis (X) which is adapted to be aligned with vertically polarized light and which is useful to reduce glare. Preferably, each of the left and right circular polarizers 43 has a thickness ranging from 0.20mm to 0.45mm.

Each of the left and right circular polarizers 43 further has two triacetyl cellulose layers 433 that are adhesively bonded to the linear polarizer film 432 and the quarter wave plate 431, respectively. In this embodiment, one of the triacetyl cellulose layers 433 of each of the left and right circular polarizers 43 is adhesively bonded to a respective one of the left and right prescription lens elements 41 through a respective one of the left and right UV-cured glue layers 42.

Preferably, each of the left and right UV-cured glue layers 42 has a thickness ranging from 80µm to 320µm, and is made from a UV curable adhesive having a working temperature greater than 80°C. Preferably, the UV curable adhesive is a UV curable acrylic based adhesive that has a composition containing 30wt% to 50wt% of acrylic resin, 40wt% to 60wt% of a photoinitiator, and 1wt% to 10wt% of additives. An example of the UV curable acrylic based adhesive is available from Guangzhou Electronic Technology Co., Ltd, China, with a catalog no. Elinopto A201. Alternatively, the UV curable adhesive can be a UV curable epoxy based adhesive that has a composition containing epoxy, a photoinitiator, and additives. An example of the UV curable epoxy based adhesive is available from Letbond Technology Co., Ltd, Taiwan, with a catalog no. 58037-05.

Each of the left and right hard coating layers 44 is made from a silicone-based hard coating material that contains siloxane and colloidal silica.

Each of the left and right prescription lens elements 41 has a contact surface 410 with a spherical curvature. Each of the left and right circular polarizers 43 has a contact surface 430 with a spherical curvature substantially equal to the spherical curvature of the respective one of the left and right prescription lens elements 41.

The left and right prescription lens elements 41 can be lenses, such as near sighted lenses, farsighted lenses, astigmatism correction lenses, etc., and preferably have a refractive index ranging from 1.45 to 1.78. The higher the refractive index, the lower will be the required thickness of the prescription lens, but the higher will be the cost thereof. Preferably, the left and right prescription lens elements 41 are made from polycarbonate or plastic CR-39® monomer.

In an exemplary embodiment, each of the left and right lens units 4 was prepared by the following steps: preparing a prescription lens element 41 having a spherical curvature based on a power or a prescribed power of the prescription lens; preparing a circular polarizer sheet having a thickness of about 0.21mm (available from Polatechno Co. , Ltd., Japan, with a catalog no. THC-125U); hot softening and shaping the circular polarizer sheet in a mold under a temperature of 90°C for forming the circular polarizer sheet into a circular polarizer 43 having a spherical curvature corresponding to the spherical curvature of the prescription lens element 41; cooling and removing the circular polarizer 43 from the mold; applying a UV-curable glue having a high heat resistance (available from Guangzhou Electronic Technology Co., Ltd, China, with a catalog no. Elinopto A201) on a concave surface of the circular polarizer 43 to form a UV-curable glue layer having a thickness of about 300µm on the concave surface; bonding the concave surface of the circular polarizer 43 to a contact surface 410 of the prescription lens element 41 through the UV-curable glue layer; curing the UV-curable glue layer using a UV light for 10 seconds to form a uniform UV-cured glue layer 42 between the concave surface and the contact surface 410; applying a hard coating material containing siloxane resin and colloidal silica on a convex surface of the circular polarizer 43 opposite to the concave surface; and baking the protective coating material under about 90°C for about one hour to form a hard coating layer 44 on the convex surface. It is noted that the UV-curable glue employed in the exemplary embodiment has a working temperature of about 100°C. If the UV-curable glue employed has a working temperature less than 90°C, the baking of the hard coating material under about 90°C can cause formation of undesired micro bubbles in the UV-cured glue layer 42 and damage to the UV-cured glue layer 42. In addition, the UV-curable glue employed in the exemplary embodiment can be completely cured within a few seconds, which can prevent material creeping or migration from occurring in the UV-curable glue layer during curing. The material creeping or migration can cause the formation of a UV-cured glue layer 42 with a non-uniform thickness and a rough surface, which can result in distortion of light passing therethrough.

By adhesively bonding the left and right circular polarizers 43 to the left and right prescription lens elements 41 through the left and right UV-cured glue layers 42, the aforesaid drawbacks associated with the prior art can be eliminated.

## Claims

1. A polarized prescription eyewear having a three-dimensional viewing function, said polarized prescription eyewear being **characterized by**:
an eyeglass frame (2);
left and right prescription lens elements (41) mounted on said eyeglass frame (2);
left and right UV-cured glue layers (42);
left and right circular polarizers (43) adhesively bonded to said left and right prescription lens elements (41) through said left and right UV-cured glue layers (42) and configured to filter out right-handed and left-handed polarized light (52, 51), respectively; and
left and right hard coating layers (44) formed on said left and right circular polarizers (43), respectively.

2. The polarized prescription eyewear of claim 1, wherein each of said left and right circular polarizers (43) has a quarter wave plate (431) and a linear polarizer film (432) that is adhesively bonded to said quarter wave plate (431) and that has a vertical transmission axis which is adapted to be aligned with vertically polarized light.

3. The polarized prescription eyewear of claim 2, wherein each of said left and right circular polarizers (43) further has two triacetyl cellulose layers (433) that are adhesively bonded to said linear polarizer film (432) and said quarter wave plate (431), respectively, one of said triacetyl cellulose layers (433) of each of said left and right circular polarizers (43) being bonded to a respective one of said left and right prescription lens elements (41) through a respective one of said left and right UV-cured glue layers (42).

4. The polarized prescription eyewear of claim 1, wherein each of said left and right UV-cured glue layers (42) is made from a UV curable acrylic based adhesive that has a composition containing 30wt% to 50wt% of acrylic resin, 40wt% to 60wt% of a photoinitiator, and 1wt% to 10wt% of additives.

5. The polarized prescription eyewear of claim 1, wherein each of said left and right UV-cured glue layers (42) is made from a UV curable epoxy based adhesive that contains epoxy resin, a photoinitiator, and additives.

6. The polarized prescription eyewear of claim 1, wherein each of said left and right hard coating layers (44) is made from a silicone-based resin.

7. The polarized prescription eyewear of claim 1, wherein each of said left and right prescription lens elements (41) has a contact surface (410) with a spherical curvature, each of said left and right circular polarizers (43) having a contact surface (430) with a spherical curvature substantially equal to said spherical curvature of the respective one of said left and right prescription lens elements (41).

8. The polarized prescription eyewear of claim 1, wherein each of said left and right prescription lens elements (41) has a refractive index ranging from 1.45 to 1.78.

9. The polarized prescription eyewear of claim 1, wherein each of said left and right circular polarizers (43) has a thickness ranging from 0.20mm to 0.45mm.
